# DEMANDE DE BREVET EUROPEEN

(11) **EP 1 283 409 A1**
(43) Date de publication de la demande: **12.02.2003**
(21) Numéro de dépôt: 01203020.1
(22) Date de dépôt: 08.08.2001
(51) Int. Cl.: G01D 5/20, G01D 5/22

(54) **Dispositif de détection**

(71) Demandeur: Université de Liège, 4020 Liège (BE)
(72) Inventeur: Martin, Nicolas, Ir. c/o Universite de Liege, 4031 Angieur (BE)

(57) **Abrégé**

Dispositif de détection d'un déplacement d'un objet comprenant une matière ferromagnétique et qui peut se déplacer le long d'un trajet. Ce dispositif comporte un générateur de circuit magnétique pourvu d'un premier et d'un deuxième noyau en matière ferromagnétique ainsi que d'une bobine d'excitation et d'une bobine de mesure, lequel générateur de circuit magnétique est relié à une unité de détection agencée pour détecter une variation de réluctance provoquée dans le circuit par le déplacement de l'objet et en déduire une position de l'objet. Dans ce dispositif, le générateur de circuit magnétique comporte un premier et un deuxième transformateur à circuit magnétique ouvert, ledit premier transformateur ayant le premier noyau et le deuxième transformateur ayant le deuxième noyau, lesdits transformateurs étant juxtaposés et comportent chacun un axe qui s'étend à travers leur noyau respectif, lesdits axes s'étendant sensiblement perpendiculaire audit trajet, ladite bobine d'excitation comportant une connexion en série de deux bobines qui forment les primaires du premier et deuxième transformateur et ladite bobine de mesure comportant une connexion en série de deux bobines qui forment les secondaires du premier et deuxième transformateur, lesdits primaires et secondaires étant raccordés en opposition de phase.

## Description

La présente invention concerne un dispositif de détection d'un déplacement d'un objet, comprenant une matière ferromagnétique et qui peut se déplacer le long d'un trajet, lequel dispositif comporte un générateur de circuit magnétique, pourvu d'un premier et d'un deuxième noyau en matière ferromagnétique ainsi que d'une bobine d'excitation et d'une bobine de mesure, lequel générateur de circuit magnétique est relié à une unité de détection agencée pour détecter une variation de réluctance provoquée dans le circuit par le déplacement de l'objet et en déduire une position de l'objet.

Un tel dispositif est connu du brevet US-A-5117181. Dans le dispositif connu, le générateur de circuit magnétique comporte deux noyaux en forme de U et en matière ferromagnétique disposés dos à dos dans un même plan. La bobine de mesure est formée par un seul enroulement bobine en opposition de phase autour de la partie centrale de chaque noyau. La bobine d'excitation est quant à elle bobinée en série autour des deux noyaux. Le dispositif de détection est monté de telle façon que l'objet se déplace perpendiculairement par rapport au plan dans lequel sont situés les deux noyaux. L'objet dont le déplacement est à détecter est quant à lui formé par une série d'éléments en matière ferromagnétique qui sont chaque fois disposés à une distance prédéterminée l'un de l'autre. Lorsque l'objet se déplace le long de son trajet et qu'un des éléments s'approche de la branche du noyau disposé en face du trajet, le circuit magnétique formé par ce noyau entouré de la bobine d'excitation va se former. Puisqu'un courant alternatif est injecté dans la bobine d'excitation, cette dernière va créer un champ magnétique dans les noyaux ferromagnétiques. Les éléments qui se déplacent le long du trajet vont modifier le flux induit dans le circuit magnétique, modifiant ainsi la réluctance de ce dernier. La mesure de cette variation de réluctance à l'aide du détecteur permet alors de déterminer le taux de déplacement de l'objet.

Un désavantage du dispositif connu est que le générateur de circuit magnétique est de construction complexe. En effet, la façon dont la bobine d'excitation et la bobine de mesure sont disposées nécessite de recouvrir les noyaux en matière ferromagnétique de chaque côté d'une plaque de blindage en matière amagnétique. Ainsi, la bobine d'excitation est séparée de celle de mesure. Cette complexité nécessite donc de devoir construire l'ensemble du dispositif sans pouvoir faire appel à des composants généralement utilisés pour détecter une variation du champ magnétique.

L'invention a pour but de réaliser un dispositif de détection d'un déplacement qui est plus simple à fabriquer sans pour autant réduire la précision de la mesure à faire.

A cette fin, un dispositif suivant l'invention est caractérisé en ce que le générateur de circuit magnétique comporte un premier et un deuxième transformateur à circuit magnétique ouvert, ledit premier transformateur ayant le premier noyau et le deuxième transformateur ayant le deuxième noyau, lesdits transformateurs étant juxtaposés et comportant chacun un axe qui s'étend à travers leur noyau respectif, lesdits axes s'étendant sensiblement perpendiculaire audit trajet, ladite bobine d'excitation comportant une connexion en série de deux bobines qui forment les primaires du premier et deuxième transformateur et ladite bobine de mesure comportant une connexion en série de deux bobines qui forment les secondaires du premier et deuxième transformateur, lesdits primaires et secondaires étant raccordés en opposition de phase. Le choix du premier et deuxième transformateur permet d'utiliser des composants généralement utilisés. Puisque les transformateurs sont à circuit ouvert et que leurs axes s'étendent sensiblement perpendiculaire au trajet suivant lequel l'objet se déplace, le mouvement de l'objet le long du trajet va provoquer la fermeture de circuit magnétique lorsque l'objet, qui comporte une matière ferromagnétique, croise l'un des axes. Etant entendu que la bobine d'excitation forme les primaires des deux transformateurs, la tension appliquée à la bobine d'excitation va induire une tension dans les secondaires lorsque le circuit magnétique se fermera à cause du mouvement de l'objet. Cette tension induite dans les secondaires va se modifier au fur et à mesure que l'objet se déplace le long du trajet. Puisque les secondaires forment la bobine de mesure, le changement de tension mesuré dans les secondaires va permettre d'en déduire le déplacement et donc la position de l'objet. Ainsi, l'emploi des transformateurs permet une mesure fiable de la position de l'objet.

Une première forme de réalisation d'un dispositif de détection suivant l'invention est caractérisée en ce que les transformateurs sont séparés de l'objet par une paroi métallique qui est faiblement conductrice de courant électrique. La détection du déplacement peut ainsi également être réalisée à travers une paroi. Une telle application est particulièrement utile lorsque l'objet se déplace dans un milieu qui doit rester isolé comme par exemple un réacteur chimique ou nucléaire.

Une deuxième forme de réalisation d'un dispositif de détection suivant l'invention est caractérisée en ce que chaque transformateur comporte une vis en ferrite placée dans chacun desdits axes et agencée pour compenser une différence de caractéristique magnétique dans le circuit magnétique de chaque transformateur. L'usage de vis en ferrite offre une solution simple et fiable pour compenser la différence de caractéristique magnétique.

Une troisième forme de réalisation d'un dispositif de détection suivant l'invention est caractérisée en ce que lesdits primaires sont reliés à une première entrée du détecteur et les secondaires en opposition à une deuxième entrée du détecteur, lequel détecteur comporte un amplificateur opérationnel relié à la deuxième entrée et dont une sortie est connectée via un circuit de déphasage à une première entrée d'un multiplicateur, lequel multiplicateur comporte une deuxième entrée reliée à la première du détecteur, une sortie du multiplicateur étant reliée à un filtre passe-bas. Une telle réalisation du détecteur permet une détermination fiable de la position de l'objet à partir de la tension d'excitation et de la tension prélevée aux secondaires.

De préférence, le détecteur comporte des moyens de linéarisation reliés à la sortie du filtre passe-bas et agencés pour linéariser le signal de sortie du filtre. Ceci permet de linéariser la valeur mesurée et de déterminer de façon linéaire la position, ce qui correspond à la position effective de l'objet.

De préférence, l'oscillateur est agencé pour produire une fréquence située entre 3KHz et 6KHZ. Des expériences ont fait apparaître que ces valeurs de fréquences donnent un résultat fiable.

L'invention sera maintenant décrite plus en détail à l'aide des dessins qui illustrent des formes de réalisation préférentielles d'un dispositif de détection suivant l'invention. Dans les dessins :
la figure 1 montre une vue d'ensemble d'une forme de réalisation d'un dispositif suivant l'invention;
la figure 2 illustre schématiquement une forme de réalisation d'un dispositif suivant l'invention et les figures 2b et 2c illustrent la tension mesurée dans les secondaires avant et après linéarisation;
la figure 3 illustre schématiquement le dispositif avec son détecteur;
les figures 4 et 5 illustrent à l'aide d'un graphique le déplacement et la rotation de l'objet; et
la figure 6 illustre schématiquement une autre forme de réalisation d'un dispositif suivant l'invention.

Dans les dessins, une même référence a été attribuée à un même élément ou à un élément analogue.

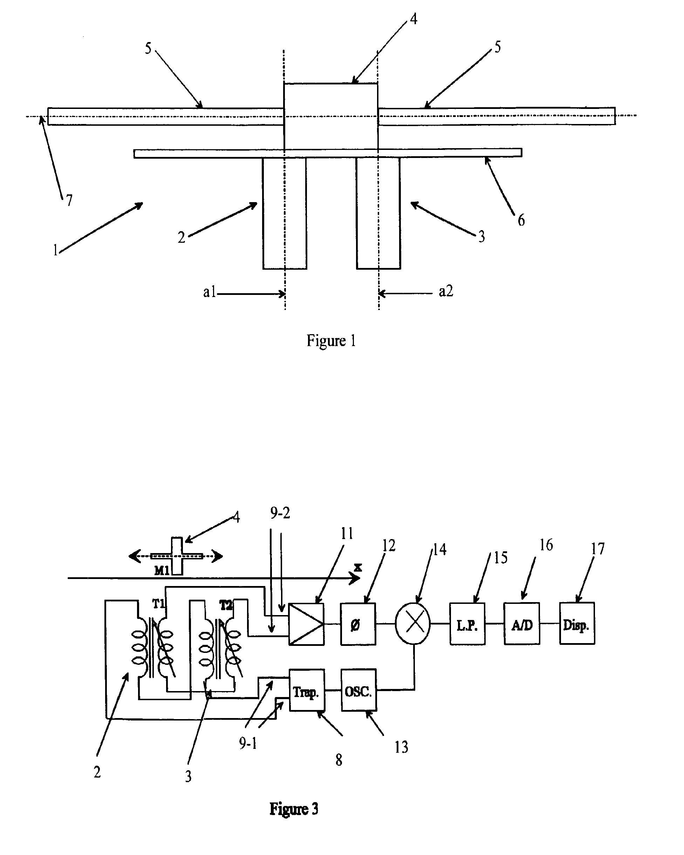

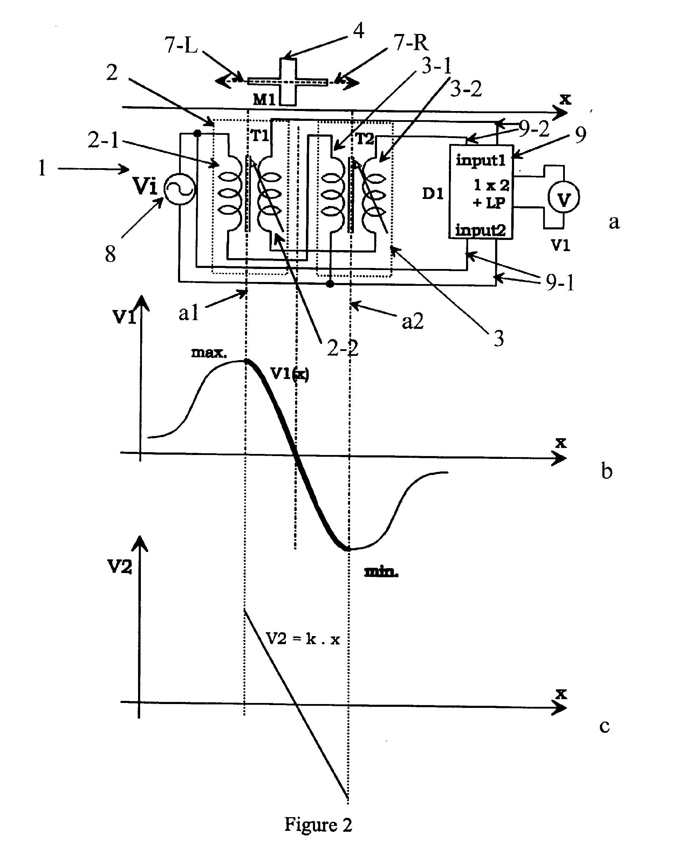

Le dispositif 1 de détection d'un déplacement d'un objet 4 suivant l'invention comporte, comme illustré à la figure 1, un premier 2 et un deuxième 3 transformateur qui sont juxtaposés en parallèle l'un par rapport à l'autre. Chaque transformateur comporte un noyau en matière ferromagnétique et fait partie d'un générateur de circuit magnétique. Un premier axe a1 et un second axe a2 s'étendent respectivement à travers le premier noyau et le deuxième noyau du premier et du deuxième transformateur, comme illustré à la figure 2. Les deux transformateurs sont à circuit magnétique ouvert et leur axes s'étendent sensiblement perpendiculaire au trajet 7 que l'objet 4 parcourt lorsqu'il se déplace sur le support 5. Ainsi, les axes a1 et a2 coupent la trajectoire de l'objet.

Tout comme les noyaux des transformateurs 2 et 3, l'objet 4 comporte une matière ferromagnétique. Le support 5 quant à lui est en matière amagnétique afin de ne pas perturber le générateur de circuit magnétique comme il sera décrit ci-dessous. Dans la forme de réalisation illustrée à la figure 1, une paroi métallique 6, qui est faiblement conductrice de courant électrique, sépare l'objet 4 des transformateurs 2 et 3. Ainsi, le déplacement de l'objet 4 peut même être détecté à travers cette paroi. Toutefois, la présence de cette paroi n'est pas indispensable pour le fonctionnement du dispositif de détection.

Comme illustré à la figure 2a, les primaires 2-1 et 3-1 du premier et deuxième transformateur sont connectés en série. Les secondaires 2-2 et 3-2 des deux transformateurs sont également connectés en série. Les primaires forment une bobine d'excitation et les secondaires une bobine de mesure. Une source 8 de tension alternative, contrôlée par un oscillateur, est reliée aux primaires ainsi qu'à une première entrée 9-1 d'une unité de détection 9. L'oscillateur fournit de préférence une onde ayant une fréquence située entre 3KHz et 6KHz. Une deuxième entrée 9-2 du détecteur 9 est reliée aux secondaires, qui sont raccordés en opposition de phase par rapport aux primaires.

Les deux transformateurs 2 et 3 comportent chacun une vis en ferrite (indiquée par la flèche dans les secondaires) placée dans l'axe du primaire et du secondaire et agencée pour compenser une différence de caractéristique magnétique dans le circuit magnétique de chaque transformateur.

Pour déterminer la position de l'objet 4 qui se déplace soit vers la gauche (7-L) soit vers la droite (7-R) le long du trajet 7, une tension sinusoïdale est appliquée à l'aide de la source 8 aux primaires 2-1 et 3-1 des transformateurs. Puisque les transformateurs sont à circuit magnétique ouvert et que leurs axes a1 et a2 coupent la trajectoire de l'objet, qui comporte une matière ferromagnétique, le croisement d'un des axes a1 ou a2 par l'objet va provoquer la fermeture du circuit magnétique dont l'axe est croisé. Cette fermeture du circuit magnétique va à son tour provoquer que la tension Vi injectée dans les primaires, qui forment un circuit d'excitation, va induire une tension Vs dans les secondaires qui forment un circuit de mesure. Ainsi, le déplacement de l'objet va provoquer une variation de réluctance dans le circuit magnétique des transformateurs. C'est la mesure de cette variation de réluctance qui va permettre de déterminer, à l'aide de l'unité de détection 9, la position relative ou absolue de l'objet sur sa trajectoire. La présence des deux transformateurs et le bobinage connectés en série permet une détection du sens de mouvement.

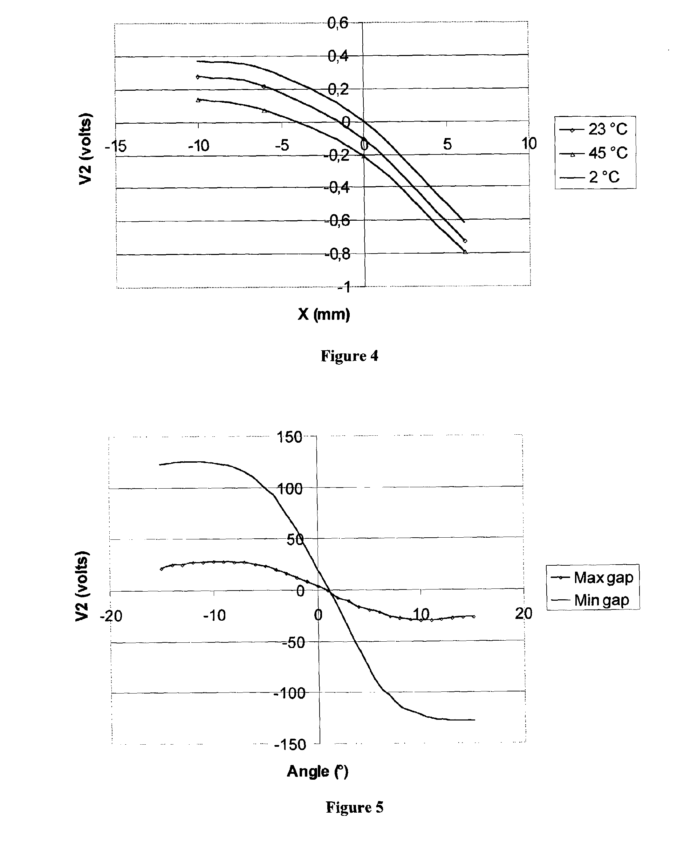

La tension Vs induite dans les secondaires 2-2 et 3-2 est récoltée à la deuxième entrée 9-2 de l'unité de détection. Cette dernière tension est légèrement déphasée par rapport à la tension (Vi) d'excitation qui elle est appliquée à l'entrée 9-1 de l'unité de détection 9. Une forme de réalisation préférentielle de cette unité de détection est illustrée à la figure 3. Les secondaires sont reliés à un amplificateur opérationnel 11 dont la sortie est reliée à un circuit de déphasage 12. Les primaires sont reliés à un générateur de tension en forme de trapèze, lequel générateur est contrôlé par un oscillateur 13 dont le signal est également fourni à une deuxième entrée d'un multiplicateur 14. Une première entrée du multiplicateur 14 est reliée à la sortie du circuit de déphasage 12. Une sortie du multiplicateur 14 est reliée à une entrée d'un filtre passe-bas 15 dont la sortie est reliée via un convertisseur analogue numérique 16 à une unité d'affichage 17 agencée pour afficher la position de l'objet.

Puisque les secondaires sont raccordés à l'amplificateur opérationnel 11 en opposition de phase par rapport aux primaires, l'amplificateur opérationnel en effectue une opération sur un résultat de soustraction. Le multiplicateur 14 réalise la multiplication entre les tensions Vi et Vs et fonctionne ainsi comme un détecteur synchrone. Le filtre passe-bas 15 est utilisé pour éliminer la composante f1 + f2 des fréquences fournies au multiplicateur. En effet, la multiplication des signaux f1 et f2 a fourni deux composantes f1 = f2 et f1- f2. Puisque les fréquences f1 et f2 sont égales dans le présent cas, le résultat obtenu est 2f1 et 0 (DC). Le signal DC permet alors la détermination du déplacement.

Afin d'obtenir une valeurs de déplacement, il est nécessaire de linéariser le signal V1 obtenu à la sortie du filtre passe-bas et illustré à la figure 2b. Pour cela un polynôme d'interpolation, de préférence du 6ème ordre, est appliqué sur le signal numérique fourni à la sortie du convertisseur analogue numérique 16. Le résultat (V2) de cette linéarisation appliquée sur le signal V1 est illustré à la figure 2c. La tension V2 est alors égale à une constante (k) multipliée par la position x de l'objet. A partir de cette valeur la position x peut alors être déterminée. La figure 4 illustre la position x de l'objet en fonction de la valeur V2 déterminée.

De préférence, et comme illustré à la figure 4, la position x=0 est choisie au centre situé entre les deux axes a1 et a2. La figure 5 illustre un déplacement non plus linéaire mais en rotation de l'objet, qui peut également être déterminée à partir de la tension V2. Dans ce cas, le déplacement a la forme d'une rotation et l'objet d'un secteur angulaire en rotation autour de son axe.

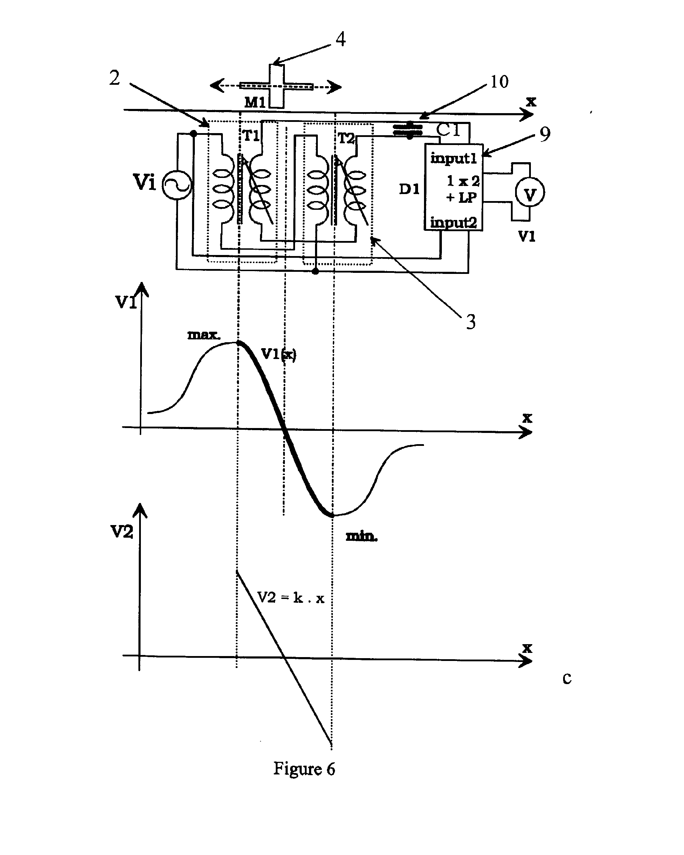

La figure 6 illustre une autre forme de réalisation d'un dispositif suivant l'invention. Celle-ci se distingue de celle illustrée à la figure 2 par l'application d'un condensateur 10 branché en parallèle aux secondaires. La valeur de ce condensateur est choisie de telle façon afin de réaliser un circuit résonant parallèle avec les bobines 2-2 et 3-2 des secondaires. L'adjonction de ce condensateur permet de relever le niveau du signal utile avant détection synchrone et de monter plus haut en fréquence pour des raisons de temps de réponse.

## Revendications

1. Dispositif de détection d'un déplacement d'un objet comprenant une matière ferromagnétique et qui peut se déplacer le long d'un trajet, lequel dispositif comporte un générateur de circuit magnétique pourvu d'un premier et d'un deuxième noyau en matière ferromagnétique ainsi que d'une bobine d'excitation et d'une bobine de mesure, lequel générateur de circuit magnétique est relié à une unité de détection agencée pour détecter une variation de réluctance provoquée dans le circuit par le déplacement de l'objet et en déduire une position de l'objet, **caractérisé en ce que** le générateur de circuit magnétique comporte un premier et un deuxième transformateur à circuit magnétique ouvert, ledit premier transformateur ayant le premier noyau et le deuxième transformateur ayant le deuxième noyau, lesdits transformateurs étant juxtaposés et comportent chacun un axe qui s'étend à travers leur noyau respectif, lesdits axes s'étendant sensiblement perpendiculaire audit trajet, ladite bobine d'excitation comportant une connexion en série de deux bobines qui forment les primaires du premier et deuxième transformateur et ladite bobine de mesure comportant une connexion en série de deux bobines qui forment les secondaires du premier et deuxième transformateur, lesdits primaires et secondaires étant raccordés en opposition de phase.

2. Dispositif de détection suivant la revendication 1, **caractérisé en ce que** les transformateurs sont séparés de l'objet par une paroi métallique qui est faiblement conductrice de courant électrique.

3. Dispositif de détection suivant la revendication 1 ou 2, **caractérisé en ce que** ledit objet est monté sur un support en matière amagnétique.

4. Dispositif de détection suivant l'une des revendications 1 à 3, **caractérisé en ce que** chaque transformateur comporte une vis en ferrite placée dans chacun desdits axes et agencée pour compenser une différence de caractéristique magnétique dans le circuit magnétique de chaque transformateur.

5. Dispositif de détection suivant l'une des revendications 1 à 4, **caractérisé en ce que** lesdits primaires sont reliés à une première entrée du détecteur et les secondaires en opposition à une deuxième entrée du détecteur, lequel détecteur comporte un amplificateur opérationnel relié à la deuxième entrée et dont une sortie est connectée via un circuit de déphasage à une première entrée d'un multiplicateur, lequel multiplicateur comporte une deuxième entrée reliée à la première du détecteur, une sortie du multiplicateur étant reliée à un filtre passe-bas.

6. Dispositif de détection suivant la revendication 5, **caractérisé en ce que** le détecteur comporte des moyens de linéarisation reliés à la sortie du filtre passe-bas et agencés pour linéariser le signal de sortie du filtre.

7. Dispositif de détection suivant la revendication 5 ou 6, **caractérisé en ce qu'**il comporte une source de tension alternative contrôlée par un oscillateur, ladite source étant connectée aux primaires.

8. Dispositif de détection suivant la revendication 7, **caractérisé en ce que** ledit oscillateur est agencé pour produire une fréquence située entre 3KHz et 6KHZ.

9. Dispositif de détection selon l'une quelconque des revendications précédentes **caractérisée en ce que** le déplacement de l'objet est une rotation.
